# FASCICULE DE BREVET EUROPEEN

(11) **EP 2 918 162 B1**
(45) Date de publication et mention de la délivrance du brevet: **03.07.2019**
(21) Numéro de dépôt: 15305365.7
(22) Date de dépôt: 11.03.2015
(51) Int. Cl.: A01G 3/04, A01D 34/13, A01D 34/408

(54) **DISPOSITIF DE COUPE À LAMES ET CONTRE-LAMES, À MOUVEMENT ELLIPTIQUE**
SCHNEIDEVORRICHTUNG MIT KLINGEN UND GEGENKLINGEN, MIT ELLIPTISCHE BEWEGUNG
CUTTING DEVICE WITH BLADES AND COUNTER-BLADES, WITH ELLIPTIC MOTION

(30) Priorité: 11.03.2014 FR 1452007
(43) Date de publication de la demande: 16.09.2015
(73) Titulaire: Coup'Eco, 17800 Pons (FR)
(72) Inventeur: Boulard, Thierry, 17460 Retaud (FR)
(74) Mandataire: Aquinov

(56) Documents cités:
- GB-A- 645 913
- US-A- 10 258
- US-A- 19 319

## Description

La présente invention concerne un dispositif de coupe à lames et contre-lames, à mouvement semi-alternatif.

On connaît différents types de lamiers permettant de tailler les haies, notamment pour les professionnels ou au moins pour du travail intensif.

On connaît des dispositifs à plateaux ou arbres rotatifs, munis de fléaux coupants. Ces dispositifs ne sont pas concernés par la présente invention car ils présentent notamment un inconvénient important qui est celui de projeter les produits issus de la coupe, même en présence d'un carter parfaitement étudié.

La présente invention intéresse les dispositifs de coupe par cisaillement.

Il existe deux principaux types de coupe par mouvement alternatif :
- Les systèmes à barre de coupe
- Les systèmes sécateurs

Les systèmes à barre de coupe sont eux-mêmes de deux types.

Le premier type de système à barre de coupe comprend un bâti avec des moyens moteur qui entraînent en mouvement alternatif une lame mobile qui est animée d'un mouvement rectiligne de translation alternatif par rapport à une contre-lame fixe. L'ensemble du bâti est porté par un bras de manoeuvre lui-même solidaire d'un porteur, ceci de façon connue.

Le mouvement de translation est perpendiculaire à la direction de déplacement du bâti.

Les branches de végétation sont prises entre lame et contre-lame affûtées si bien que les branches sont coupées.

Un système similaire à barre de coupe avec une lame mobile animée d'un mouvement de translation elliptique est décrit dans le document GB 645913 A.

Le second type de système à barre de coupe consiste à disposer des moyens moteur qui entraînent deux lames animées d'un mouvement rectiligne de translation alternatif, en opposition de phase.

De tels agencements ont des vitesses d'animation importantes, une belle qualité de coupe mais des capacités de coupe limitées, de l'ordre de 20 mm, pour donner un ordre d'idées. De plus, pour la taille de côté d'une haie, la végétation tombe au sol mais la végétation sur le dessus reste en place et il faut généralement plusieurs passages pour en éliminer la plus grande partie.

Lorsque la végétation est un peu dense, il faut relativement peu de branches en prise simultanément pour provoquer un blocage du mouvement.

Les systèmes sécateurs comprennent une lame affûtée et une contre-lame affûtée également avec des bords parallèles à la direction d'avancement et la lame est aussi animée d'un mouvement rectiligne de translation perpendiculairement à la direction d'avancement. Les épaisseurs de lames sont plus importantes et les dimensions aussi, permettant ainsi de couper des diamètres beaucoup plus importants de 70à 90 mm, la lame étant généralement actionnée par un vérin double effet qui procure une puissance bien supérieure. Les vitesses d'animation sont plus lentes mais la coupe résultante est réalisée par pression et provoque un éclatement, la qualité de coupe est donc médiocre.

Si de tels dispositifs répondent à la problématique de non projection, il n'en demeure pas moins qu'ils présentent soit des limites de puissance, soit des limites de vitesse et de qualité de coupe.

La taille n'est donc pas parfaitement propre et les bois éclatés, présentant un aspect non tranché, peuvent faciliter le développement de maladies, notamment le pourrissement.

De plus, lors de la coupe, les débris de taille peuvent s'accumuler sur les lames jusqu'à entraver leur fonctionnement ou pour le moins les rendre moins efficaces, perturbant la prise en charge des nouvelles branches à tailler comme indiqué ci-avant.

La coupe par cisaillage nécessite une forte énergie car il s'agit d'un cisaillage et non d'une coupe tranchée comme avec une lame de couteau par exemple. En effet lors d'une coupe avec un couteau, l'utilisateur exerce un effort combiné de pression suivant l'axe de coupe, par exemple du haut vers le bas et d'une translation dans le sens perpendiculaire à l'axe de coupe, par exemple orienté vers lui en tirant la lame.

La coupe résulte d'une combinaison des deux mouvements et suivant la vitesse de déplacement dans chacune des deux directions, la ligne de déplacement peut être une courbe.

Si ce mouvement est réalisable à la main, on comprend que dans le cas d'une machine industrielle, cela soit plus difficile à obtenir, surtout que les diamètres des végétaux à couper peuvent aller de 25 mm jusqu'à 80 mm. Il faut donc pouvoir mécaniser pour déployer une énergie importante supérieure à celle de l'homme mais en même temps exercer un effort combiné différent du simple mouvement du sécateur.

La présente invention propose un dispositif de coupe à lame et contre-lame, à mouvement semi-alternatif, visant à pallier les inconvénients des agencements de l'art antérieur et vise notamment un dispositif économe en énergie, qui améliore le rendement de travail, qui génère une coupe tranchée nette, qui élimine simultanément les débris sur les dents et qui reste simple au titre de la fabrication et surtout du point de vue de la maintenance, tel que défini dans la revendication 1.

Le dispositif selon la présente invention est maintenant décrit en détail suivant un mode de réalisation particulier, non limitatif, la description étant conduite en regard des dessins annexés, dessins sur lesquels les différentes figures représentent :
- figure 1 : une vue complète en perspective du dispositif selon la présente invention,
- figure 2 : une vue identique à celle de la figure 1 mais avec retrait des capots de protection,
- figure 3 : une vue en coupe transversale de la figure 1,
- figure 4 : une vue en coupe transversale de la figure 1,
- figure 5A : une vue en coupe transversale de la figure 1, avec la lame de coupe dans une première position, en saillie maximale,
- figure 5B :une vue en coupe transversale de la figure 1, avec la lame de coupe dans une seconde position, en saillie minimale.
- Figures 6A à 6E : une vue d'un synoptique de fonctionnement du dispositif selon la présente invention.

Pour toute la suite de la description, il est entendu par mouvement semi-alternatif un mouvement de translation elliptique. Le mouvement de translation elliptique inclut le mouvement de translation circulaire.

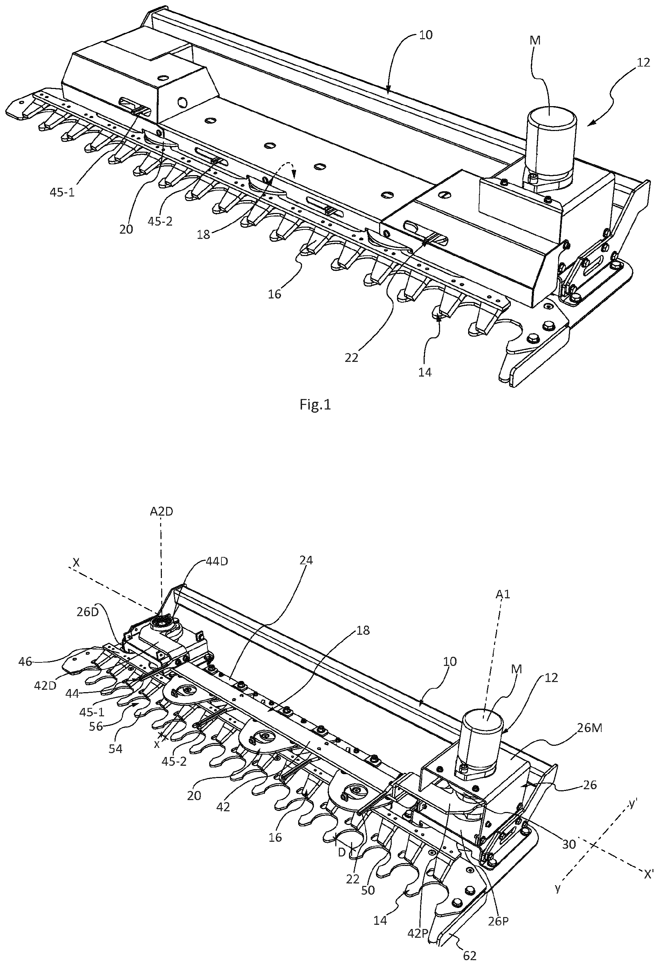

Le dispositif de coupe à lame et contre-lame, à mouvement semi-alternatif selon la présente invention comprend un bâti 10 destiné à être rapporté sur un bras de manipulation, non représenté mais très bien connu du domaine des machines d'entretien d'espaces verts ou de taille en arboriculture, comme montré sur les figures 1 et 2.

Ce bâti 10 comprend un axe longitudinal XX', qui correspond à la plus grande dimension générale du dispositif et un axe transversal YY', qui correspond à la plus petite dimension générale dudit dispositif. L'axe YY' est considéré comme la direction d'avance.

Ce bâti 10 porte de façon générale, des moyens 12 moteurs avec un moteur M, une contre-lame 14, une lame 16, des moyens 18 de guidage, des moyens 20 presseurs ainsi que des moyens 22 éjecteur.

Le bâti 10 comprend un plaque 24 inférieure sur laquelle sont montés les moyens 12 moteurs.

Ces moyens 12 moteurs et ces moyens 18 de guidage comprennent deux lanternes 26 disposées aux extrémités dudit bâti, à savoir une lanterne 26P, proximale et une lanterne 26D, distale, ainsi qu'une lanterne 26M moteur, toutes visibles sur la figure 2 notamment.

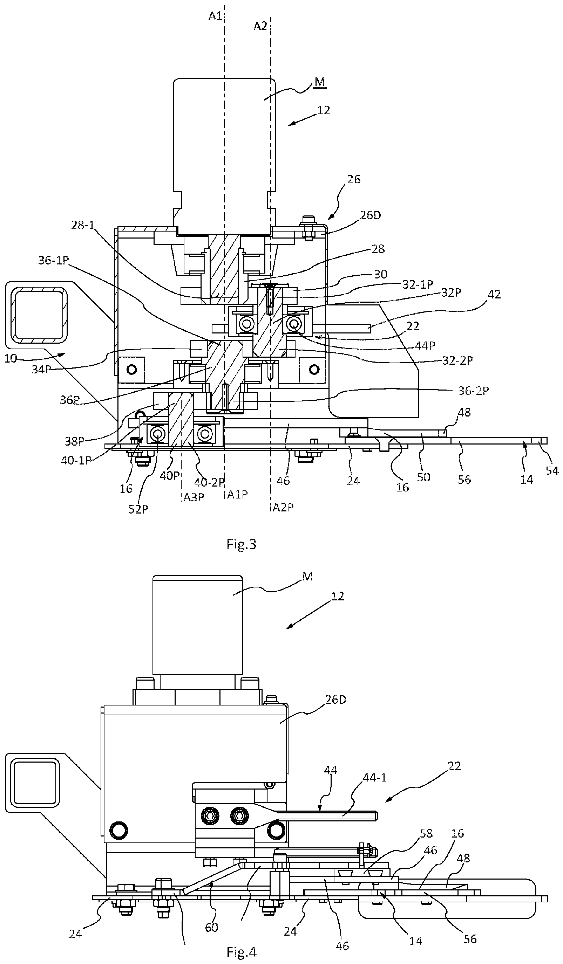

La lanterne 26M moteur et sa lanterne 26P proximale associée sont représentées en détail sur la coupe de la figure 3 et sur la figure 4. La lanterne 26M moteur porte le moteur M, de type à alimentation électrique ou hydraulique suivant la puissance et/ou le type d'énergie disponible. Ce moteur M dispose d'un arbre 28 d'entraînement dont l'extrémité 28-1 débouche dans ladite lanterne 26M, l'axe de rotation A1 étant central ainsi que représenté. L'extrémité 28-1 dudit arbre 28 porte un premier excentrique 30 moteur.

Cet excentrique 30 moteur reçoit la première extrémité 32-1P d'un premier arbre 32P porteur, solidaire en rotation de l'excentrique 30 moteur, suivant un axe A2P décentré par rapport à A1.

Ce premier arbre 32P porteur reçoit notamment les moyens 22 éjecteurs qui seront décrits plus en détail ultérieurement.

La seconde extrémité 32-2P de ce premier arbre 32P porteur reçoit un excentrique 34P de renvoi, identique à l'excentrique 30 moteur.

Cet excentrique 34P de renvoi est solidaire en rotation de la première extrémité 36-1P d'un arbre 36P d'entraînement, coaxial à l'arbre A1, rapporté sur le dessus de la lanterne proximale donc sur le bâti 10 dont elle est solidaire.

Cet arbre 36P d'entraînement est mobile en rotation, autour de son axe de rotation A1P, grâce à un montage sur roulement, rapporté sur le bâti 12.

La seconde extrémité 36-2P de cet arbre 36P d'entraînement porte un second excentrique 38P moteur. Ce second excentrique 38P moteur porte de façon décentrée suivant un axe A3P, en l'occurrence quasiment diamétralement opposé, l'extrémité 40-1P d'un arbre 40P d'entraînement tandis que l'extrémité 40-2P coopère avec la lame 16 qui sera décrite en détail ultérieurement.

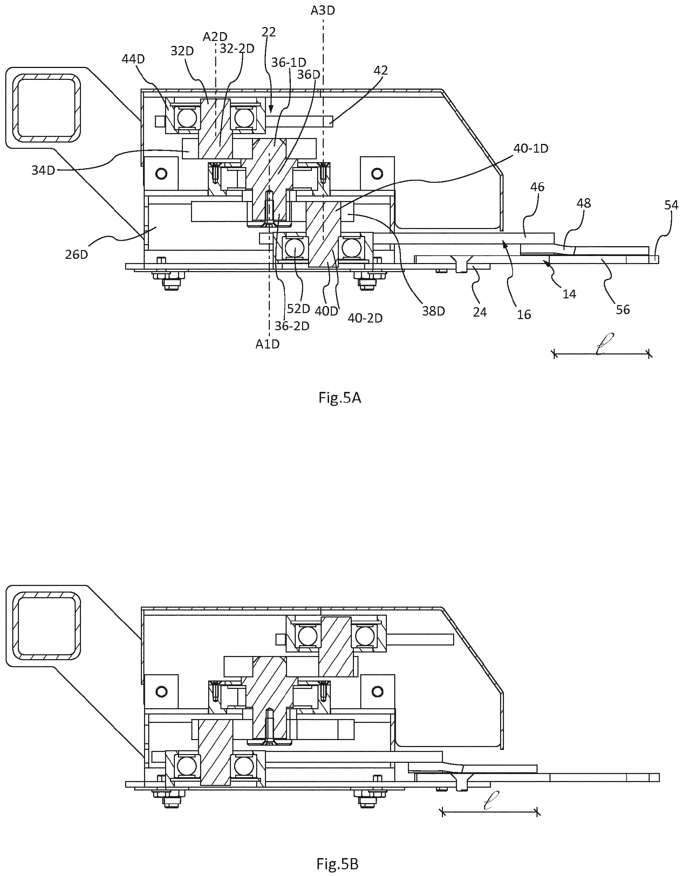

La lanterne 26D distale est représentée indifféremment sur la figure 5A ou 5B.

Cette lanterne 26D distale est agencée de façon identique à la lanterne 26P proximale mais sans moteur.

En effet on retrouvera les éléments identiques avec les mêmes références mais avec en final la lettre D en lieu et place de la lettre P.

Ainsi, de façon symétrique, la lanterne 26D distale comporte un premier arbre 32D, mobile en rotation autour d'un axe A2D.

Ce premier arbre 32D porteur reçoit aussi les moyens 22 éjecteurs qui seront décrits plus en détail ultérieurement.

La seconde extrémité 32-2D de ce premier arbre 32D porteur reçoit un excentrique 34D de renvoi.

Cet excentrique 34D de renvoi est solidaire en rotation de la première extrémité 36-1D d'un arbre 36D d'entraînement, rapporté sur le dessus de la lanterne 26D distale donc sur le bâti 10.

Cet arbre 36D d'entraînement suiveur est mobile en rotation, autour de son axe de rotation A1D, de façon libre, grâce à un montage sur roulement rapporté sur le bâti 10.

La seconde extrémité 36-2D de cet arbre 36D d'entraînement suiveur, porte un second excentrique 38D moteur. Ce second excentrique 38D moteur porte de façon décentrée suivant un axe A3D, l'extrémité 40-1D d'un arbre 40D d'entraînement tandis que l'extrémité 40-2D coopère avec la lame 16 qui sera décrite en détail ultérieurement.

Les moyens 22 éjecteurs comprennent une barre 42, de dimensions adaptées pour former contrepoids des mouvements de la lame 16, lame qui sera décrite en détail plus avant dans la description. Cette barre 42 comporte deux bras 42P, 42D de liaison, formant un ensemble monolithique, voir sur la figure 2 plus particulièrement. Ces deux bras 42P et 42D sont solidaires d'une cage d'un roulement 44P et 44D monté sur l'arbre 32P et 32D respectivement, de façon à faire subir à la barre 42 une trajectoire elliptique, incluant la trajectoire circulaire.

De façon à permettre une éjection des débris de coupe, les moyens 22 éjecteurs sont munis de façon complémentaire, de doigts 45 éjecteurs, en l'occurrence de doigts 45-1 et 45-2. Ces doigts 45-1 sont rapportés en partie supérieure de la barre et les doigts 45-2 sont rapportés en partie inférieure de la barre 42.

La lame 16 de coupe comprend un porte-lames 46 sur sa zone arrière et des couteaux 48 en forme de dents, rapportés sur ce porte-lames 46. La représentation géométrique de dessus de chaque lame est sensiblement un trapèze, la grande base étant rapportée par vissage sur le porte-lames 16, la petite base étant plus étroite mais bien visible, d'une largeur x.

On note qu'un seul des bords 50 de chaque couteau 48 est tranchant. La longueur libre de chaque couteau 48 est référencée l. On note aussi dans le mode particulier de réalisation selon la présente invention que les deux bords du trapèze ne sont pas parallèles.

Le porte-lames 46 est monté sur des roulements 52P et 52D qui sont eux-mêmes associés aux arbres 40P et 40D d'entraînement.

Ces arbres 40P et 40D d'entraînement étant montés de façon excentrique par rapport aux arbres 36P et 36D d'entraînement, grâce aux excentriques 38P et 38D, le porte-lames 46 et donc la lame 16 complète subissent un mouvement elliptique.

La contre-lame 14 est une pièce fixe, monolithique, disposée sous la lame, et destinée à recevoir au contact ladite lame 16 et plus particulièrement les couteaux 48. Cette contre-lame 14 est solidaire du bâti 10 et plus particulièrement de sa plaque 24 inférieure par sa partie arrière et comporte sur sa partie avant des dents 54. Ces dents 54 définissent entre elles des indentations 56 sensiblement circulaires, d'un diamètre D, ouvertes sur l'avant, avec une ouverture de largeur inférieure audit diamètre D, destinées à recevoir les végétaux à couper. La forme permet ainsi aux branches qui pénètrent dans l'ouverture d'être immobilisées dans la forme courbe de ces indentations.

La largeur de ces dents 54 est supérieure à la largeur x de la petite base de chaque lame.

La contre-lame 14 selon la présente invention ne comporte aucune zone tranchante mais des découpes droites. La contre-lame pourrait porter des zones tranchantes de la même façon.

Les moyens 20 presseurs selon la présente invention visent à plaquer la lame 16 de coupe et plus particulièrement les couteaux 48 contre la contre-lame 14, notamment contre les dents 54. Ces moyens presseurs, représentés en détail sur les figures 2 et 4 comprennent des patins 58 portés par des éléments 60 de rappel élastique.

Ces éléments 60 de rappel élastique sont en forme de fer à cheval et munis d'une pliure pour obtenir deux plans de façon que les extrémités libres dudit fer à cheval soient rapportées et fixées sur le bâti 10 et plus particulièrement sur sa plaque 24 inférieure et que la partie opposée concave viennent au droit de la lame 16 et plus particulièrement du porte-lames 46. En l'occurrence dans le mode de réalisation représenté, ces éléments 60 de rappel élastique sont au nombre de trois.

Chaque patin 58 est disposé sous la partie opposée concave de chaque élément 60 de rappel élastique, en appui sur le porte-lames 46 ou inversement porté par le porte-lame.

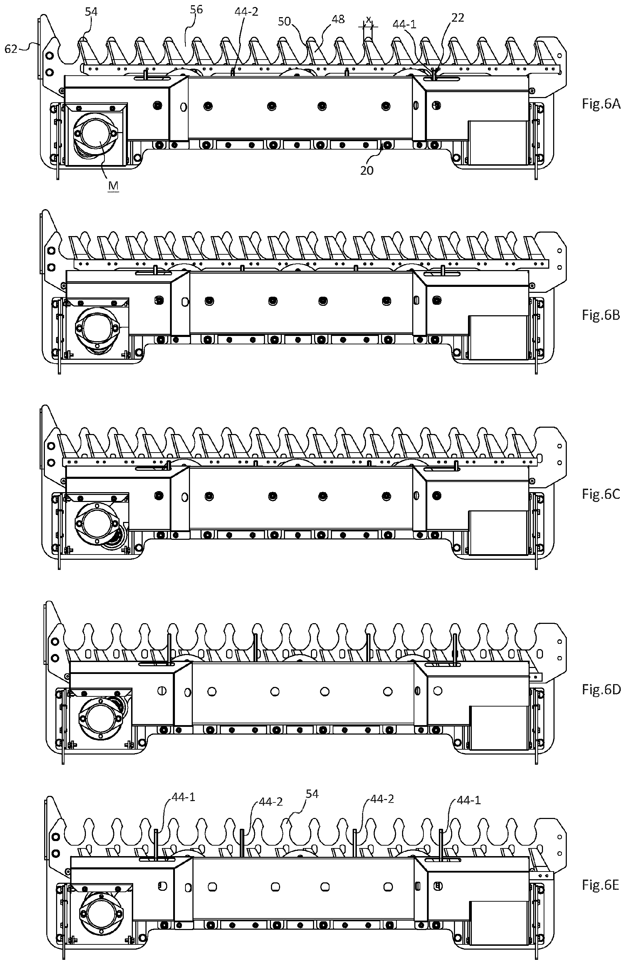

Le dispositif qui vient d'être décrit fonctionne de la façon qui va maintenant être décrite en regard du synoptique des figures 6 et en regard des autres figures, indifféremment.

Lorsque le moteur M est mis en marche, l'extrémité 28-1 de l'arbre 28 d'entraînement tourne autour de l'axe A1P et met en rotation l'excentrique 30 sur lequel est rapporté la première extrémité 32-1P du premier arbre 32P porteur. Ce premier arbre 32P porteur va décrire un cercle autour de l'axe A1P.

Le montage de la barre 42 rigide sur roulement 44P, ladite barre formant contrepoids des mouvement de la lame 16, permet grâce au bras 42P de liaison de suivre une trajectoire elliptique, le plus grand axe de l'ellipse étant orienté suivant l'axe YY' transversal.

Parallèlement, le roulement 44D est sollicité et la barre 42 rigide entraîne, par le bras 42D cette fois, le premier arbre 32D distal en rotation autour de l'axe A1D. En effet, cet arbre 32D est monté par sa seconde extrémité 32-2D, sur l'excentrique 34D de renvoi, lui-même solidaire en rotation de la première extrémité 36-1D de l'arbre 36D d'entraînement suiveur, rapporté sur le dessus de la lanterne 26D distale donc sur le bâti 10, monté sur un roulement et définissant l'axe de rotation A1D.

Ainsi, le bras 42D et la barre 42 décrivent une trajectoire elliptique.

Symétriquement, la lame décrit une trajectoire elliptique, mais avec un décalage angulaire de 175° de façon à permettre un équilibrage et à conserver le même sens de rotation.

Ce mouvement elliptique est obtenu par le fait que la lame 16 et plus particulièrement son porte-lames 46, sont entraînés par les excentriques 38P et 38D simultanément, qui sont eux-mêmes mis en rotation par les arbres moteurs 36P et 36D, libres en rotation.

Ces excentriques 38P et 38D entraînent en rotation les arbres 40P et 40D dont les extrémités 40-2P et 40-2D, mettent en mouvement elliptique le porte-lames 46, monté sur roulement 52P et 52D.

Le mouvement elliptique est décalé angulairement de 175° par rapport à celui de la barre 42 rigide de façon à obtenir un équilibrage et à provoquer un mouvement toujours dans le même sens ainsi qu'indiqué. Un décalage précis de 180° pourrait permettre une rotation des paliers suiveurs dans le sens opposé.

Pour atteindre ce résultat, les arbres 32P, 32D porteurs sont décalés angulairement de 175° par rapport aux arbres 40P, 40D d'entraînement pour assurer cet équilibrage.

Le mouvement elliptique du porte-lames 46 conduit donc les couteaux 48 à décrire également un mouvement elliptique, puisqu'ils en sont solidaires.

Ce mouvement elliptique des lames est généré dans un plan parallèle à celui des dents 54 de la contre-lame 14, les dents étant plaquées contre ladite contre-lame de façon à obtenir une coupe.

Les dents étant fixes, on constate notamment sur le synoptique que les lames sont initialement en position en saillie, voir figure 6A, c'est-à-dire que les lames sont superposées aux dents et la partie affûtée reste masquée par lesdites dents. Ceci permet notamment une excellente pénétration dans la végétation.

Lorsque le moteur tourne, il conduit les lames à poursuivre leur mouvement elliptique et les lames viennent en saillie maximale, le petit côté du trapèze des dents étant quasiment à l'extrémité des dents, voir figure 6B. Les dents ont commencé un mouvement de pénétration dans l'ouverture 56 et ont donc pénétré dans l'éventuelle branche logée dans cet ouverture. Le mouvement est un mouvement combiné de translation suivant l'axe XX' mais aussi suivant l'axe YY', vers l'avant, l'avant étant considéré par rapport à la direction de déplacement du dispositif. On note que la barre 42 rigide est en position arrière assurant l'équilibrage.

Une fois en partie haute, à l'apex du mouvement vers l'avant, la lame est retirée dans un mouvement suivant l'axe YY', mais vers l'arrière, ainsi que suivant l'axe XX' et la lame traverse toute la section de l'ouverture 56, tel que montré sur la figure 6C. La section de l'ouverture de diamètre D est ainsi intégralement balayée.

Le diamètre D correspond au petit diamètre de l'ellipse du mouvement elliptique et donc à l'excentration donnée par les excentriques 38P et 38D.

La figure 6D montre le retrait des lames de la section de l'ouverture assurant ainsi une coupe certaine et complète de la branche.

Sur la figure 6E, les dents atteignent l'apex opposé, correspondant au retrait maximal des couteaux 48 par rapport aux dents 54. L'amplitude avant/arrière des couteaux 48 correspond au grand diamètre de l'ellipse décrite par la lame 16.

Les déplacements sont égaux en cas de mouvement circulaire.

On constate ainsi que la branche a subi un mouvement combiné de la lame qui assure une coupe très franche, facilitée par la translation curviligne de la partie tranchante 50 de chaque couteau 48 sur le végétal et par l'immobilisation de la branche dans la partie courbe de l'indentation.

La coupe est assimilable à un tranchage. Les patins 58 plaqués par les moyens 60 de rappel élastique assurent un maintien des lames plaquées contre la contre-lame, tout au long de leurs déplacements elliptiques.

La pénétration de la lame dans le bois étant facilitée, l'énergie nécessaire est moindre, le moteur force moins, les problèmes de blocage sont limitées.

De plus les moyens 22 d'éjections comprennent des doigts 45-1 et 45-2 qui assurent un dégagement des débris de coupe. Ce dégagement intervient à la suite de la coupe lorsque les lames sont en retrait, une fois le végétal coupé.

En effet ces doigts sont solidaires de la barre 42 rigide et ces doigts 45 ont un mouvement elliptique identique à celui des lames mais opposé chronologiquement, en ce sens que les doigts font saille lorsque les lames sont en retrait et inversement les doigts sont escamotés de la zone de coupe lorsque les lames sont en saillie.

Ceci évite l'accumulation de débris sur la zone de coupe constituée des dents 54 et des couteaux 48.

Sur les dessins, on peut noter la présence d'un sabot 62 latéral proximal, ceci de façon connue, disposé sur le côté du bâti 10.

Ce sabot a pour rôle de protéger le dispositif contre les chocs, latéralement et pour guider les végétaux soumis à la taille ainsi que pour écarter les autres végétaux hors de la zone de coupe.

Le dispositif selon la présente invention porte de façon connue des capots de protection comme sur la figure 1, capots qui sont ôtés sur la figure 2. Ces capots présentent uniquement un rôle de protection des organes rotatifs mais aussi de protection des utilisateurs des pièces mécaniques en mouvement, durant le fonctionnement.

## Revendications

1. Taille-haie à lames et contre-lames, notamment comprenant un bâti (10) destiné à être rapporté sur un bras de manipulation, comprenant un axe longitudinal XX' et un axe transversal YY' du bâti, des moyens (12) moteurs, une contre-lame (14) solidaire dudit bâti (10), une lame (16), des moyens (18) de guidage de la lame, lesdits moyens (12) moteurs comprenant un moteur M avec un arbre (28) moteur et les moyens (18) de guidage de la lame (16) comprenant un montage à excentriques, entraînés en rotation par ledit arbre (28) moteur du moteur M, de façon à générer un mouvement semi-alternatif consistant en un mouvement de translation elliptique de la lame, **caractérisé en ce que** les moyens (18) de guidage de la lame (16) comprennent au moins deux lanternes (26P) proximale et (26D) distale, comportant chacune respectivement un arbre d'entraînement (36P, 36D) suiveur, portant chacun au moins un excentrique (38P, 38D), chaque excentrique portant un arbre d'entraînement (40P, 40D), chacun de ces arbres d'entraînement (40P, 40D) étant monté à rotation par rapport à la lame (16) par des roulements (52P, 52D), un (36P) des arbres d'entraînement suiveur étant entraînés par le moteur M.

2. Taille-haie à lames et contre-lames, à mouvement semi-alternatif, selon la revendication 1, **caractérisé en ce que** le premier arbre d'entraînement (36P) porte un second excentrique (34P) qui reçoit un arbre (32P) porteur, cet arbre (32P) porteur étant solidaire d'un excentrique (30), cet excentrique étant solidaire de l'arbre (28) moteur du moteur M.

3. Taille-haie à lames et contre-lames, à mouvement semi-alternatif, selon la revendication 2, **caractérisé en ce que** le second arbre d'entraînement (36D) porte un second excentrique (34D) avec un arbre (32D) porteur, et **en ce qu'**il comprend des moyens (22) éjecteur comportant une barre (42) rigide avec deux bras (42P, 42D), solidaires d'une cage d'un roulement (44P, 44D) monté sur l'arbre (32P, 32D) porteur, ladite barre portant des doigts (44-1,44-2) éjecteurs.

4. Taille-haie à lames et contre-lames, à mouvement semi-alternatif, selon la revendication 3, **caractérisé en ce que** les doigts (44-1,44-2) éjecteurs sont rapportés en dessus et en dessous de la barre (42) rigide.

5. Taille-haie à lames et contre-lames, à mouvement semi-alternatif, selon la revendication 3 ou 4, **caractérisé en ce que** la barre (42) est de dimensions adaptées pour former contrepoids des mouvement de la lame (16).

6. Taille-haie à lames et contre-lames, à mouvement semi-alternatif, selon l'une quelconque des revendications précédentes, **caractérisé en ce que** la lame (16) de coupe comprend un porte-lames (46) sur sa zone arrière et des lames (48) rapportées sur ledit porte-lames (46), le porte-lames (46) étant monté sur les roulements (52P, 52D) eux-mêmes associés aux arbres (40P, 40D) d'entraînement.

7. Taille-haie à lames et contre-lames, à mouvement semi-alternatif, selon la revendication 6, **caractérisé en ce que** les lames (48) sont de forme géométrique en trapèze, un seul des bords (50) étant tranchant, la petite base étant de largeur x.

8. Taille-haie à lames et contre-lames, à mouvement semi-alternatif, selon l'une quelconque des revendications précédentes, **caractérisé en ce que** la contre-lame (14) est une pièce fixe, monolithique, solidaire du bâti (10) par sa partie arrière, comportant des dents (54) définissant entre elles des indentations (56) sensiblement circulaires.

9. Taille-haie à lames et contre-lames, à mouvement semi-alternatif, selon la revendication 7 et 8, **caractérisé en ce que** la largeur des dents (54) est supérieure à la largeur x de la petite base de chaque lame (48).

10. Taille-haie à lames et contre-lames, à mouvement semi-alternatif, selon l'une quelconque des revendications 3 à 5, **caractérisé en ce que** les arbres (32P, 32D) porteurs sont décalés angulairement de 175° par rapport aux arbres (40P, 40D) d'entraînement de façon à obtenir un équilibrage du mouvement elliptique de la lame (16) par le mouvement elliptique de la barre (42) rigide.

11. Taille-haie à lames et contre-lames, à mouvement semi-alternatif, selon l'une quelconque des revendications précédentes, **caractérisé en ce qu'**il comprend des moyens (20) presseurs comportant des patins (58) portés par des éléments (60) de rappel élastique et en appui sur la lame (16) sous l'action des moyens (60) de rappel élastique.

12. Taille-haie à lames et contre-lames, à mouvement semi-alternatif, selon la revendication 11, **caractérisé en ce que** les éléments (60) de rappel élastique sont en forme de fer à cheval et munis d'une pliure pour obtenir deux plans, les extrémités libres dudit fer à cheval étant rapportées et fixées sur le bâti (10) et la partie opposée concave venant au droit de la lame (16).

## Patentansprüche

1. Heckenschere mit Klingen und Gegenklingen, insbesondere mit einem Trageelement (10), das dazu bestimmt ist, an einem Handhabungsarm angebracht zu sein, mit einer Längsachse XX' und einer Querachse YY' des Trageelements, mit Motormitteln (12), eine an dem Trageelement (10) angebrachte Gegenklinge (14), einer Klinge (16), Führungsmitteln (18) für die Klinge, wobei die Motormittel (12) einen Motor M mit einer Motorwelle (28) aufweisen und die Führungsmittel (18) der Klinge (16) eine exzentrische Halterung aufweisen, die durch die Motorwelle (28) des Motors M in Drehung versetzt werden, um auf diese Weise eine halbe Hin- und Herbewegung zu erzeugen, die in einer elliptischen Translationsbewegung der Klinge besteht, **dadurch gekennzeichnet, dass** die Führungsmittel (18) der Klinge (16) wenigstens zwei Kappen, eine proximale (26P) und eine distale (26D), aufweisen, die jeweils eine nachlaufende Antriebswelle (36P, 36D) aufweisen, die jeweils wenigstens einen Exzenter (38P, 38D) halten, wobei jeder Exzenter eine Antriebswelle (40P, 40D) hält und jede der Antriebswellen (40P, 40D) bezüglich der Klinge (16) mittels Wälzlager (52P, 52D) drehbar montiert sind, wobei eine (36P) der nachlaufenden Antriebswellen durch den Motor M angetrieben ist.

2. Heckenschere mit Klingen und Gegenklingen mit einer halben Hin- und Herbewegung nach Anspruch 1, **dadurch gekennzeichnet, dass** die erste Antriebswelle (36P) einen zweiten Exzenter (34P) hält, der eine Trägerwelle (32P) aufnimmt, wobei die Trägerwelle (32P) mit einem Exzenter (30) verbunden ist, und der Exzenter mit der Motorwelle (28) des Motors M verbunden ist.

3. Heckenschere mit Klingen und Gegenklingen mit einer halben Hin- und Herbewegung nach Anspruch 2, **dadurch gekennzeichnet, dass** die zweite Antriebswelle (36D) einen zweiten Exzenter (34D) mit einer Trägerwelle (32D) hält, und dass diese Auswurfmittel (22) umfasst, die einen starren Balken (42) mit zwei Armen (42P, 42D) aufweist, die an dem Gehäuse eines Wälzlagers (44P, 44D) angebracht sind, das an der Trägerwelle (32P, 32D) angebracht ist, wobei der Balken Auswurffinger (44-1, 44-2) hält.

4. Heckenschere mit Klingen und Gegenklingen mit einer halben Hin- und Herbewegung nach Anspruch 3, **dadurch gekennzeichnet, dass** die Auswurffinger (44-1, 44-2) oberhalb und unterhalb des starren Balkens (42) angebracht sind.

5. Heckenschere mit Klingen und Gegenklingen mit einer halben Hin- und Herbewegung nach Anspruch 3 oder 4, **dadurch gekennzeichnet, dass** der Balken (42) Abmessungen aufweist, die dazu geeignet sind, ein Gegengewicht zu den Bewegungen der Klinge (16) zu bilden.

6. Heckenschere mit Klingen und Gegenklingen mit einer halben Hin- und Herbewegung nach einem der vorhergehenden Ansprüche, **dadurch gekennzeichnet, dass** die Klinge (16) zum Schneiden im hinteren Bereich einen Klingenträger (46) und an dem Klingenträger (46) angebrachte Klingen (48) aufweist, wobei der Klingenträger (46) an den Wälzlagern (52P, 52D) angebracht ist, die selbst mit den Antriebswellen (40P, 40D) verbunden sind.

7. Heckenschere mit Klingen und Gegenklingen mit einer halben Hin- und Herbewegung nach Anspruch 6, **dadurch gekennzeichnet, dass** die Klingen (48) geometrisch trapezförmig sind, wobei nur eine der Kanten (50) schneidend ist und die kleine Grundseite die Abmessung x aufweist.

8. Heckenschere mit Klingen und Gegenklingen mit einer halben Hin- und Herbewegung nach einem der vorhergehenden Ansprüche, **dadurch gekennzeichnet, dass** die Gegenklinge (14) ein feststehendes einstückiges Teil ist, das in seinem hinteren Bereich mit dem Trageelement (10) verbunden ist und Zähne (54) aufweist, die zwischen sich im Wesentlichen kreisförmige Einzahnungen (56) bilden.

9. Heckenschere mit Klingen und Gegenklingen mit einer halben Hin- und Herbewegung nach Anspruch 7 und 8, **dadurch gekennzeichnet, dass** die Breite der Zähne (54) größer als die Breite x der kleinen Grundseite jeder Klinge (48) ist.

10. Heckenschere mit Klingen und Gegenklingen mit einer halben Hin- und Herbewegung nach einem der vorhergehenden Ansprüche 3 bis 5, **dadurch gekennzeichnet, dass** die Trägerwellen (32P, 32D) bezüglich der Antriebswellen (40P, 40D) winkelmäßig um 175° versetzt sind, um auf diese Weise einen Ausgleich der elliptischen Bewegung der Klinge (16) durch die elliptische Bewegung des starren Balkens (42) zu erreichen.

11. Heckenschere mit Klingen und Gegenklingen mit einer halben Hin- und Herbewegung nach einem der vorhergehenden Ansprüche, **dadurch gekennzeichnet, dass** diese Druckmittel (20) aufweist, die Kufen (58) umfassen, die von elastischen Rückstellmitteln (60) gehalten sind und die durch die Einwirkung der elastischen Rückstellmittel (60) auf die Klinge (16) gedrückt sind.

12. Heckenschere mit Klingen und Gegenklingen mit einer halben Hin- und Herbewegung nach Anspruch 11, **dadurch gekennzeichnet, dass** die elastischen Rückstellmittel (60) hufeisenförmig ausgebildet sind und mit einem Knick versehen sind, um zwei Ebenen zu erhalten, wobei die freien Enden des Hufeisens an dem Trageelement (10) angebracht und befestigt sind und der entgegengesetzte konkave Teil im Bereich der Klinge (16) zu liegen kommt.

## Claims

1. A hedge cutter with blades and counter-blades, in particular comprising a frame (10) intended to be attached to a handling arm, comprising a longitudinal axis XX' and a transverse axis YY' of the frame, drive means (12), a counter-blade (14) secured to said frame (10), a blade (16), and means (18) for guiding the blade, said drive means (12) comprising a motor M with a motor shaft (28), and the means (18) for guiding the blade (16) comprising an assembly with eccentrics, rotated by said motor shaft (28) of the motor M, so as to generate a semi-alternating movement comprising an elliptical translation movement of the blade, **characterised in that** the means (18) for guiding the blade (16) comprises at least two proximal (26P) and distal (26D) cages, each comprising respectively a follower drive shaft (36B, 36D), each carrying at least one eccentric (38P, 38D), each eccentric carrying a drive shaft (40P, 40D), each of these drive shafts (40P, 40D) being mounted for rotation with respect to the blade (16) by means of bearings (52P, 52D), one (36P) of the follower drive shafts being driven by the motor M.

2. A hedge cutter with blades and counter-blades, with semi-alternating movement, according to claim 1, **characterised in that** the first drive shaft (36P) carries a second eccentric (34P) that receives a carrier shaft (32P), this carrier shaft (32P) being secured to an eccentric (30), this eccentric being secured to the motor shaft (28) of the motor M.

3. A hedge cutter with blades and counter-blades, with semi-alternating movement, according to claim 2, **characterised in that** the second drive shaft (36D) carries a second eccentric (34D) with a carrier shaft (32D), and **in that** it comprises ejector means (22) comprising a rigid bar (42) with two arms (42P, 42D), secured to a cage of a bearing (44P, 44D) mounted on the carrier shaft (32P, 32D), said bar carrying ejector fingers (44-1, 44-2).

4. A hedge cutter with blades and counter-blades, with semi-alternating movement, according to claim 3, **characterised in that** the ejector fingers (44-1, 44-2) are attached above and below the rigid bar (42).

5. A hedge cutter with blades and counter-blades, with semi-alternating movement, according to claim 3 or 4, **characterised in that** the bar (42) has dimensions suitable for forming counterweights for the movements of the blade (16).

6. A hedge cutter with blades and counter-blades, with semi-alternating movement, according to any of the preceding claims, **characterised in that** the cutting blade (16) comprises a blade holder (46) on the rear area thereof and blades (48) attached to said blade holder (46), the blade holder (46) being mounted on the bearings (52P, 52D) themselves associated with the drive shafts (40P, 40D).

7. A hedge cutter with blades and counter-blades, with semi-alternating movement, according to claim 6, **characterised in that** the blades (48) have a geometric trapezium shape, only one of the edges (50) being sharp, the small base being of width x.

8. A hedge cutter with blades and counter-blades, with semi-alternating movement, according to any of the preceding claims, **characterised in that** the counter-blade (14) is a single-piece fixed part secured to the frame (10) by its rear part, comprising teeth (54) defining between them substantially circular indentations (56).

9. A hedge cutter with blades and counter-blades, with semi-alternating movement, according to claims 7 and 8, **characterised in that** the width of the teeth (54) is greater than the width x of the small base of each blade (48).

10. A hedge cutter with blades and counter-blades, with semi-alternating movement, according to any of claims 3 to 5, **characterised in that** the carrier shafts (32P, 32D) are offset angularly by 175° with respect to the drive shafts (40P, 40D) so as to obtain a balancing of the elliptical movement of the blade (16) by the elliptical movement of the rigid bar (42).

11. A hedge cutter with blades and counter-blades, with semi-alternating movement, according to any of the preceding claims, **characterised in that** it comprises presser means (20) comprising pads (58) carried by elastic return elements (60) and in abutment on the blade (16) under the action of the elastic return means (60).

12. A hedge cutter with blades and counter-blades, with semi-alternating movement, according to claim 11, **characterised in that** the elastic return elements (60) are in a horseshoe shape and provided with a fold in order to obtain two planes, the free ends of said horseshoe being attached and fixed to the frame (10) and the concave opposite part coming in line with the blade (16).
